# EUROPEAN PATENT SPECIFICATION

(11) **EP 0 595 433 B1**
(45) Date of publication and mention of the grant of the patent: **14.01.1998**
(21) Application number: 93203030.7
(22) Date of filing: 28.10.1993
(51) Int. Cl.: B23K 31/02, F16L 49/00

(54) **Metal-ceramic connection and method for the production thereof**
Metall-Keramikverbindung, und Verfahren zu seiner Herstellung
Connection métal-céramique, ainsi que méthode de production

(30) Priority: 30.10.1992 NL 9201899
(43) Date of publication of application: 04.05.1994
(73) Proprietor: Koninklijke Schelde Groep B.V., NL-4381 SE Vlissingen (NL)
(72) Inventor: Van der Goes, Jacobus Johannes, NL-4386 AS Vlissingen (NL); Van Sluys, Johan Marinus, NL-4381 VK Vlissingen (NL)
(74) Representative: de Bruijn, Leendert C.

(56) References cited:
- DE-A- 3 436 831
- DE-A- 3 526 952
- FR-A- 1 133 503
- FR-A- 2 538 166
- US-A- 1 931 666
- IBM TECHNICAL DISCLOSURE BULLETIN vol. 9, no. 11 , April 1967 pages 1570 - 1571 'Ceramic to Metal Vacuum Seal'

## Description

The invention relates to a metal-ceramic connection comprising a metal part and a ceramic part, in which a layer of metallic hard solder is applied to the surface of the ceramic part.

Such a connection is generally known in the prior art and is used where the metal part has a coefficient of expansion which approaches the coefficient of expansion of the ceramic part. However, if materials such as types of steel, in particular stainless steel, which have to be connected to ceramic parts are used, great problems occur on account of the differing coefficient of expansion of these materials. This leads to inadmissible stresses which cannot be absorbed by the ceramic material in particular.

Industrial ceramic materials are often ideal for use, on account of their special mechanical, physical and chemical properties in components in which extreme thermal, corrosive and/or erosive conditions prevail.

However, in order to be able to use ceramic materials constructively, it is often necessary or desirable to connect the ceramic elements to metallic ones.

For this purpose, mechanical connection techniques such as clamping or shrinking are generally used in practice. Bonding with organic composites or soldering with so-called enamels are commonly used connection methods.

In addition, metallic soldering is also used, sometimes with pre-metallization of the ceramic components, or making use of active solders. These are solders to which active elements such as Ti or Zr are added in order to produce better wetting of the ceramic surface by the soldering material.

Such soldered connections can be used in particular where the tightness of the connection and the strength and stability of the connection at relatively high temperatures have to meet high standards.

Soldering is a thermal operation in which the soldered articles cool down from the soldering temperature to the ambient temperature. Thermal cycles can also occur one or more times in the use of the connection.

The differences in coefficient of expansion between the ceramic and the metal component(s) of the soldered connection, generally a factor of 3 to 4, mean that special measures have to be taken to ensure that this connection "survives" the abovementioned thermal cycles.

A successfully used method is to incorporate in the connection a chain of several types of material with coefficient of expansion rising successively in the direction of the final metal construction part. This solution has the disadvantage that it is relatively expensive and is often undesirable on account of the corrosive stress prevailing.

The invention relates to a constructive measure to compensate adequately for these differences in coefficient of expansion.

This object is achieved in the case of a metal-ceramic connection of the type described above with the characterizing measures of Claim 1. The invention is based on the idea of placing between the metal part and the ceramic part an auxiliary part which is also made of metal, but is flexible in the direction parallel to the ceramic surface, so that the differences in expansion between the ceramic part and the metal part can be absorbed by this metal auxiliary part.

Such an auxiliary part can be provided in many different forms. For example, it can consist of a number of strips placed between the metal part and the ceramic part. Such a solution is important in particular where simplicity is required and neither the ceramic part nor the metal part bounds a space which is to be sealed off. These strips can vary in width from wire thickness upwards. Another possibility is to fit a corrugated plate. The corrugated shape can absorb variations in expansion or shrinkage between the metal part and the ceramic part. Such an expansion or shrinkage does not only occur immediately after hard soldering, but also where the parts in question are subjected to changing thermal cycles, for example in applications where the ceramic part in particular is used in a heat exchanger or filter. In this case the metal auxiliary part is fitted on the end face of the ceramic pipe. This contrasts with the construction which is proposed in French Patent Application 1,133,503, in which a corrugated auxiliary part is fitted around a pipe and the openings lying between them are filled with solder. The construction disclosed therein relates only to a fitting piece. As soon as the whole construction is filled with solder, a rigid connection is obtained, and it will break immediately on the first heating or cooling cycle if the inner pipe is of ceramic material. If the metal auxiliary part is placed on the end face of the pipe, this phenomenon will not occur. The corrugated metal auxiliary part can be applied in an annular form, in order to provide a transition in this way between the end surface of a ceramic pipe and a metal pipe. In this way sealing problems arising where ceramic pipes are used in, for example, heat exchangers or separating plants can be avoided, because the sealing can be taken over by the metal part which can be attached by conventional techniques such as welding to, for example, a pipe plate.

In order also to absorb expansion in the direction at right angles to the surface of the ceramic part, a further metal auxiliary part which is flexible in that direction can be present. An example here is a bellows. The ceramic part is preferably sintered aluminium oxide. As indicated above, problems occur in particular with the difference in coefficient of expansion between ceramic part and metal part if the metal part is of stainless steel and, because stainless steel is generally used in the processing industry, the invention provides a particularly suitable solution for this. The hard solder is preferably a hard solder based on TiCuSil.

The invention also relates to a method for producing a connection between a metal part and a ceramic part, comprising the possible machining of a surface of the ceramic part and immediately afterwards applying a hard solder layer thereto.

According to the present invention, a metal auxiliary part is placed between the metal part and the ceramic part, which auxiliary part is soldered to the ceramic part and is flexible in the direction parallel to the surface of said ceramic part. In this case the layer of hard solder is applied directly to the surface without a further treatment such as pre-wetting being carried out. The measures described above mean that for the soldered connection to be successful the ceramic parts do not have to meet strict standards with regard to measurement and shape tolerances. Consequently, there is no need for the complicated and expensive operations of cylindrically or conically grinding to size of the ceramic part. It goes without saying that the choice of material of the different parts is adapted to the prevailing corrosive and thermal conditions, and such geometrical shapes are produced that the tensile and bending stresses remain at a sufficiently low level both during the soldering cycle (cooling down phase) and during any thermal cycles during operation.

The invention is explained in greater detail below with reference to examples of embodiments shown in the drawing, in which:
Fig. 1 shows in elevation a metal-ceramic connection according to the invention;
Fig. 2 shows the metal-ceramic connection according to Fig. 1 partially cut away;
Fig. 3 shows an application of the metal-ceramic connection according to Figs. 1 and 2; and
Fig. 4 shows a further embodiment of a metal-ceramic connection according to the invention.

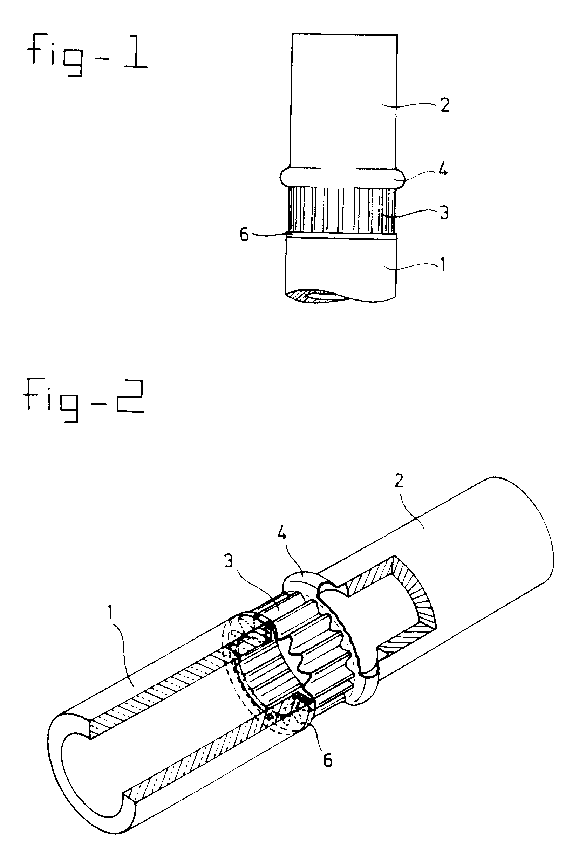

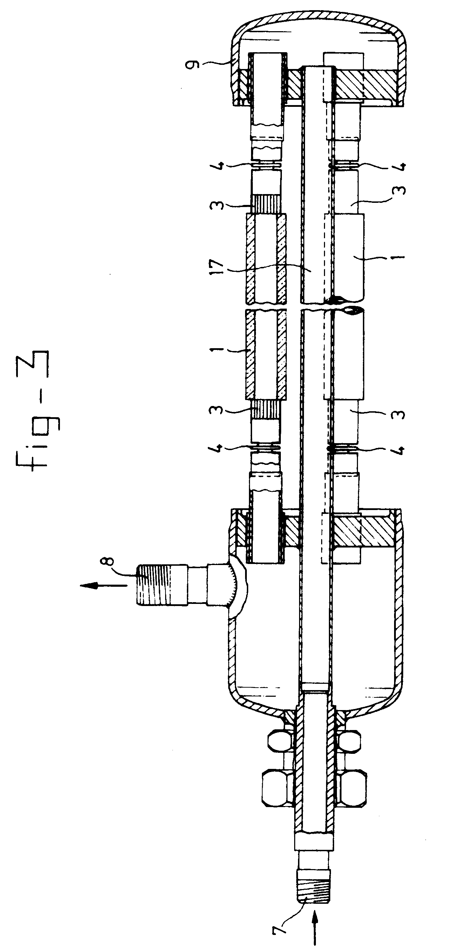

Fig. 1 shows a ceramic part 1, which has to be connected to a metal part 2. For this purpose, use is made of a metal auxiliary part 3, which is preferably integral with the metal part 2. An axial bellows 4 could be interposed. The thickness ratio of the various parts can be seen more clearly from Fig. 2, which also shows that the metal auxiliary part 3 is connected to the ceramic part 1 by means of a layer 6 of hard solder. If heating or cooling causes the expansion of the ceramic part to deviate considerably from the expansion of the metal part 2, such a difference will be absorbed by the corrugated part 3. The latter consists of a relatively thin metal part which can simply follow the movements of the end face of the ceramic part 1 or pipe 2.

The connection described above is produced by providing the metal auxiliary part 3. This may or may not already be connected to the axial bellows 4 or the metal part 2. The ceramic pipe 1, after preworking if necessary, is then provided with a layer of solder and, while the metal auxiliary part 3 is simultaneously heated, is pressed against the ceramic pipe 1, so that a connection is produced. It is clear that the axial bellows is used to absorb stresses in the axial direction of the pipe assembly thus obtained.

Fig. 3 shows the use of the pipe assembly thus obtained on the basis of a heat exchanger. In this case the inlet of such a heat exchanger is indicated by 7 and the outlet by 8. Material flows in the first instance through the central pipe 17 in the drawing, and turns around in chamber 9 and moves back through the pipes 1 to outlet 8.

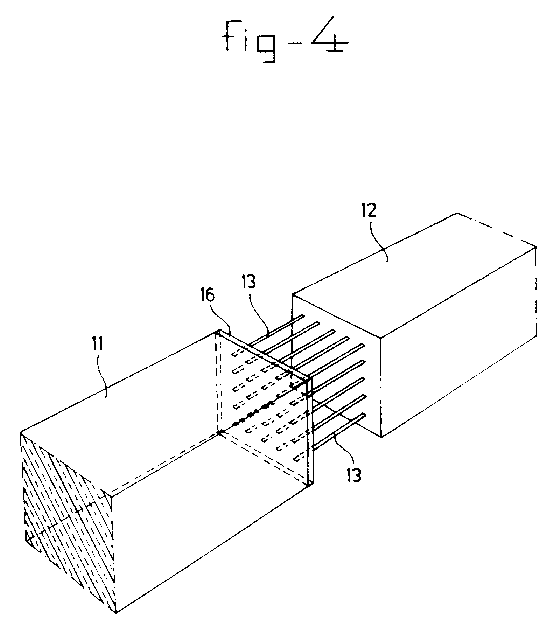

Fig. 4 shows another possibility for connecting a ceramic part 11 to a metal part 12. Here, the metal auxiliary part consists of a number of metal strips or hairs 13 which are inserted into the layer of solder 16. Such a connection is important in those cases where tensile stress is exerted on the various parts.

The ceramic part can be soldered to the metal part by means of, for example, an active solder, i.e. a solder in which fixing beforehand on a eutectic Ag/Cu base with an addition of 2.5% Ti is not necessary. The metal part 2 can be made of, for example, stainless steel, type AISI 316.

It has been found that a metal auxiliary part is embodied in the manner described below, the tension occurring between the ceramic part and metal part can be limited in an extremely effective way. The sinusoidal radial bellows pattern must in this case be produced as follows:
- number of sinusoidal corrugations:: 1 to 1.5 times the pipe diameter in mm
- amplitude:: 0.3 to 0.4 times the wall thickness of the pipe in mm
- height of radial bellows shape:: 0.2 to 1 times the pipe diameter in mm, with a minimum of 3 mm
- wall thickness:: between 0.05 and 0.4 mm

Although the invention is described above with reference to a preferred embodiment, it must be understood that numerous modifications can be made to it without going beyond the scope of the appended claims. A large number of variations are conceivable with the embodiment according to Fig. 4 in particular. The abovementioned strips may or may not be curved, or may be corrugated or designed in another way.

## Claims

1. Metal-ceramic connection comprising a metal part (2, 12) and a ceramic part (1, 11), in which a layer (6, 16) of metallic hard solder is applied to the surface of the ceramic part, characterized in that the layer of metallic hard solder is connected at the other side to a metal auxiliary part which is flexible at least in the direction parallel to the surface of the ceramic part, and the metal auxiliary part is connected to the metal part.

2. Connection according to Claim 1, in which the metal auxiliary part comprises a number of metal strips (13).

3. Connection according to one of the preceding claims, in which the metal auxiliary part comprises a corrugated plate.

4. Connection according to one of the preceding claims, in which both the metal part and the ceramic part comprise a pipe, and the surface of the ceramic part comprises the end pipe surface.

5. Connection according to Claim 4, in which an annular corrugated metal auxiliary part (3) is connected to the end pipe surface.

6. Connection according to one of the preceding claims, in which a further metal auxiliary part which is flexible in the direction at right angles to the ceramic surface is present.

7. Connection according to Claim 6, in conjunction with Claim 4 or 5, in which said further metal auxiliary part comprises a bellows (4).

8. Connection according to one of the preceding claims, in which the ceramic part comprises sintered Al₂O₃.

9. Connection according to one of the preceding claims, in which the metal part comprises stainless steel.

10. Connection according to one of the preceding claims, in which the hard solder is a hard solder based on TiCuSil.

11. Method for producing a connection between a metal part and a ceramic part, comprising applying a hard solder layer to the surface of the ceramic part, characterized in that a metal auxiliary part is placed between the metal part and the ceramic part, which auxiliary part is soldered to the ceramic part and is flexible in the direction parallel to the surface of said ceramic part.

12. Method according to Claim 11, wherein immediately before applying a hard solder layer the related surface of the ceramic part is machined.

## Patentansprüche

1. Metall-Keramik-Verbindung, umfassend ein Metallteil (2, 12) und ein Keramikteil (1, 11), bei der eine Schicht (6, 16) aus Metallhartlot auf die Oberfläche des Keramikteils aufgebracht ist, **dadurch gekennzeichnet**, daß die Schicht aus Metallhartlot auf der anderen Seite mit einem Metallhilfsteil verbunden ist, das zumindest in der Richtung parallel zur Oberfläche des Keramikteils flexibel ist, und daß das Metallhilfsteil mit dem Metallteil verbunden ist.

2. Verbindung nach Anspruch 1, bei der das Metallhilfsteil eine Anzahl an Metallstreifen (13) umfaßt.

3. Verbindung nach einem der vorhergehenden Ansprüche, bei der das Metallhilfsteil eine gewellte Platte umfaßt.

4. Verbindung nach einem der vorhergehenden Ansprüche, bei der sowohl das Metallteil als auch das Keramikteil ein Rohr umfassen und die Oberfläche des Keramikteils die Rohrstirnfläche umfaßt.

5. Verbindung nach Anspruch 4, bei der ein ringförmiges gewelltes Metallhilfsteil (3) mit der Rohrstirnfläche verbunden ist.

6. Verbindung nach einem der vorhergehenden Ansprüche, bei der ein weiteres Metallhilfsteil vorhanden ist, das in der Richtung im rechten Winkel zur Keramikoberfläche flexibel ist.

7. Verbindung nach Anspruch 6 zusammen mit Anspruch 4 oder 5, bei der das weitere Metallhilfsteil einen Faltenbalg (4) umfaßt.

8. Verbindung nach einem der vorhergehenden Ansprüche, bei der das Keramikteil gesintertes Al₂O₃ umfaßt.

9. Verbindung nach einem der vorhergehenden Ansprüche, bei der das Metallteil rostfreien Stahl umfaßt.

10. Verbindung nach einem der vorhergehenden Ansprüche, bei der das Hartlot ein Hartlot auf der Basis von TiCuSil ist.

11. Verfahren zur Herstellung einer Verbindung zwischen einem Metallteil und einem Keramikteil, das das Aufbringen einer Hartlotschicht auf die Oberfläche des Keramikteils umfaßt, **dadurch gekennzeichnet**, daß ein Metallhilfsteil zwischen dem Metallteil und dem Keramikteil angeordnet wird, wobei das Hilfsteil an das Keramikteil angelötet wird und in der Richtung parallel zur Oberfläche des Keramikteils flexibel ist.

12. Verfahren nach Anspruch 11, bei dem unmittelbar vor dem Aufbringen einer Hartlotschicht die betreffende Oberfläche des Keramikteils maschinell bearbeitet wird.

## Revendications

1. Connexion métal-céramique comprenant une partie métallique (2, 12) et une partie céramique (1, 11), dans laquelle une couche (6, 16) de matière métallique de brasage fort est appliquée sur la surface de la partie céramique, caractérisée par le fait que la couche de matière métallique de brasage fort est connectée de l'autre côté à une partie auxiliaire métallique qui est flexible au moins dans la direction parallèle à la surface de la partie céramique, et la partie auxiliaire métallique est connectée à la partie métallique.

2. Connexion selon la revendication 1, dans laquelle la partie auxiliaire métallique comprend un nombre de bandes métalliques (13).

3. Connexion selon l'une des revendications précédentes, dans laquelle la partie auxiliaire métallique comprend une plaque ondulée.

4. Connexion selon l'une des revendications précédentes, dans laquelle à la fois la partie métallique et la partie céramique comprennent un tube, et la surface de la partie céramique comprend la surface du tube dans sa partie d'extrémité.

5. Connexion selon la revendication 4, dans laquelle une partie auxiliaire métallique ondulée annulaire (3) est connectée à la surface du tube dans sa partie d'extrémité.

6. Connexion selon l'une des revendications précédentes, dans laquelle se trouve une autre partie auxiliaire métallique qui est flexible dans la direction à angle droit de la surface céramique.

7. Connexion selon la revendication 6, conjointement avec l'une des revendications 4 ou 5, dans laquelle ladite autre partie auxiliaire métallique comprend un soufflet (4).

8. Connexion selon l'une des revendications précédentes, dans laquelle la partie céramique comprend de l'Al₂O₃ fritté.

9. Connexion selon l'une des revendications précédentes, dans laquelle la partie métallique comprend de l'acier inoxydable.

10. Connexion selon l'une des revendications précédentes, dans laquelle la matière de brasage fort est une matière de brasage fort à base de TiCuSil.

11. Procédé de fabrication d'une connexion entre une partie métallique et une partie céramique, comprenant l'application d'une couche de matière de brasage fort sur la surface de la partie céramique, caractérisé par le fait qu'une partie auxiliaire métallique est placée entre la partie métallique et la partie céramique, laquelle partie auxiliaire est assemblée par brasage à la partie céramique et est flexible dans la direction parallèle à la surface de ladite partie céramique.

12. Procédé selon la revendication 11, dans lequel, immédiatement avant l'application d'une couche de matière de brasage fort, la surface apparentée de la partie céramique est usinée.
